# EUROPEAN PATENT APPLICATION

(11) **EP 0 921 027 A2**
(43) Date of publication of application: **09.06.1999**
(21) Application number: 98122690.5
(22) Date of filing: 30.11.1998
(51) Int. Cl.: B60K 23/08, B60K 28/16, A01B 69/00

(54) **Transfer clutch control for four-wheel drive vehicle**

(30) Priority: 02.12.1997 JP 33185097; 14.04.1998 JP 10247498
(71) Applicant: KANZAKI KOKYUKOKI MFG. CO., LTD., Amagasaki-Shi, Hyogo-Ken (JP)
(72) Inventor: Matsufuji, Mizuya, Amagasaki-shi, Hyogo-ken (JP)
(74) Representative: Henkel, Feiler, Hänzel

(57) **Abstract**

A four-wheel driven vehicle includes a first transmitting system (14) from an engine (E) to left and right first driving wheels (8) provided with a braking unit, and a second transmitting system (18) branching from the first transmitting system to second driving wheels (12) serving as steerable wheels. The second transmitting system is provided therein with a frictional transmitting passage (17a) having a frictional torque, which is smaller than that between the second driving wheels and a road surface, and a directly transmitting passage (17b) disposed in parallel with the frictional transmitting passage, so that one of both the passages is selected. The frictional transmitting passage is selected when a speed-changing operating tool (31) is operated to its high speed position or when a steering device (4) is operated beyond the predetermined rate, and the directly transmitting passage (17b) is selected in all other cases.

## Description

### Background of the Invention

### Field of the Invention

The present invention is related to a four-wheel driven vehicle as a tractor or the like having a power transmitting system for second driving wheels (front wheels) branching from a power transmitting system for first driving wheels (rear wheels) equipped with a braking unit.

### Related Art

As compared to a two-wheel driving system, a four-wheel driving system easily get the strong propelling force so as to be effective at climbing a hill or working in a paddy field.

However, driving front wheels on the low-resistant flat road as an asphalt way or the like is a power-wasting. Furthermore, inasmuch as the peripheral speed of the front wheels is slightly set higher than that of rear wheels in order to minimize the cornering radius of a working vehicle, the problem arises that the grip of the rear wheels makes the front wheels slip and to wear during a usual traveling on the road.

Therefore an operator blocks the power transmitting system to the front wheels so as to drive only the rear wheels, in other words, to travel in the two-wheel driven system during usual traveling on the road.

When the rear wheels are shut off in the four-wheel driving mode, the braking force to the rear wheels extends to the front wheels such that the frictional resistance is generated between all the four wheels and the road. However, when the rear wheels are shut off in the two-wheel driving mode, the frictional resistance is generated between the rear wheels and the road, such that the problem arises that the braking distance becomes longer than that of a four-wheel driven vehicle.

### Summary of the Invention

The present invention provides a four-wheel driven vehicle dividing a second transmitting system of second driving wheels as steerable wheels from a first transmitting system between a prime mover and both lateral first driving wheels provided with respective breaking units, which can limit the peripheral speed of the second driving wheels so as not to exceed that of first driving wheels for avoiding the slip of the second driving wheels, which can extend the braking force of the first driving wheels to the second driving wheels so as to reduce the braking distance.

Then, in the second transmitting system are provided a frictional transmitting passage having a smaller frictional torque than that between the second driving wheels and the road, and a directly transmitting passage in parallel to the frictional transmitting passage, so that one of both the transmitting passages is to be selected.

Due to such a construction, in case of working traveling on field, an operator selects the directly transmitting passage so as to drive all four wheels, thereby obtaining a strong propelling force, whereby the efficiency of the work can be increased. In case of regular traveling on road, the operator selects the frictional transmitting passage, so that when a friction is generated between the second driving wheels and the road, a slip is generated in the frictional transmitting passage having the smaller frictional torque than that of said friction. Then, the peripheral speed of the second driving wheels does not exceed that of the first driving wheels in similar to traveling of a two-wheel driven vehicle, thereby avoiding the slip of the second driving wheels and enabling small cornering to be done without damage of the road.

Also, power is always transmitted to the second driving wheels through the frictional transmitting passage, so that once the first driving wheels are shut off through the breaking units, the breaking force reaches the second driving wheels. Thus, the frictional resistance is generated between all four wheels and the road so as to reduce the braking distance.

Furthermore, in such a construction that the frictional transmitting passage and the directly transmitting passage are disposed in parallel in the second transmitting system, a transmitting gear taking out the power for driving the second driving wheels from the first transmitting system is freely provided on an output shaft drivingly connected to the second driving wheels. A frictional transmitting device is provided between the transmitting gear and the output shaft so as to construct the frictional transmitting passage. A directly transmitting device is also provided on the output shaft so as to be disposed in parallel with the frictional transmitting device. Whereby the switching portion can be shared between both devices so as to simplify and compact the construction.

Alternatively, a frictional transmitting passage is provided in the second transmitting system so as to switch between the state in which the frictional torque of the frictional transmitting passage is smaller than that of the second driving wheels against the road and the state in which it is not smaller than the frictional torque of the second driving wheels.

Due to such a construction, in case of working traveling, an operator selects the state of the frictional transmitting passage in which the frictional torque is not small, so as to bring the vehicle into a four-wheel driving mode, such that the efficiency of the work can be increased by the strong propelling force. In case of traveling on road, the operator selects the state of the frictional transmitting passage in which the frictional torque is small, such that when the friction is generated between the second driving wheels and the road, a slip is generated in the frictional transmitting passage because the friction torque of the frictional transmitting passage is smaller than that of the friction between the second driving wheels and the road. Then the peripheral speed of the second driving wheels does not exceed that of the first driving wheels in similar to traveling of a two-wheel driven vehicle, thereby avoiding the slip of the second driving wheels and enabling small cornering to be done without damage of the road.

Also, power is always transmitted to the second driving wheels through the frictional transmitting passage even if the small frictional torque condition is selected. Once the first driving wheels are shut off through said breaking units, the breaking force reaches the second driving wheels. The frictional resistance is generated between all four wheels and the road so as to reduce the braking distance.

And also, due to a construction, the only frictional transmitting device can bring a four-wheel driving mode, thereby simplifying and compacting the structure of the second transmitting system.

The selection of the frictional transmitting passage in case of using the former second transmitting system having the frictional transmitting passage and the directly transmitting passage disposed in parallel, and the selection of the state of the frictional transmitting passage in which the frictional torque is small in case of using the latter second transmitting system having the only frictional transmitting passage are automatically performed when speed-changing means disposed in the first transmitting system is set to a high-speed position.

Accordingly, when an operator shifts the speed-changing operating tool to the high-speed position, driving power is automatically transmitted to the second driving wheels through the frictional transmitting passage, in condition that the frictional torque is small, whereby the slip of the second driving wheels can be avoided and the braking distance can be reduced without further operation of selecting the driving mode, thereby simplifying and easing the operator's operation.

Furthermore, the selection of the frictional transmitting passage in case of using the former second transmitting system having the frictional transmitting passage and the directly transmitting passage disposed in parallel, and the selection of the state of the frictional transmitting passage in which the frictional torque is small in case of using the latter second transmitting system having the only frictional transmitting passage are automatically performed when a steering operating tool is operated for steering beyond the predetermined degree.

Accordingly, when an operator operates the steering operating tool beyond the predetermined degree, driving power is automatically transmitted to the second driving wheels through the frictional transmitting passage, in condition that the frictional torque is small, whereby the slip of the second driving wheels can be avoided and the braking distance can be reduced without further operation of selecting the driving mode, thereby simplifying and easing the operator's operation.

Furthermore, in case of whichever second transmitting system of the former and the latter is used, the power transmitted to the second driving wheels may be operable to be made or broken. Accordingly, the vehicle can travel at two-wheel driving mode in condition that the power transmitted to second driving wheels is perfectly shut off, thereby saving the energy during traveling on road.

With those and the other objects in view, the present invention consists in the methods and the construction hereinafter fully described, illustrated in the accompanying drawings, and set forth in the claims hereto appended, it being understood that various changes in the operation, form, proportion and minor details of construction, within the scope of the claims, may be restored to without departing from the spirit of the present invention or sacrificing any of the advantages thereof.

### Brief Description of the Figures

Fig. 1 is a side view of a tractor serving as a four-wheel driven vehicle employing the construction according to the present invention;
Fig. 2 is a sectional side view of a front wheel driving power take out mechanism according to the first embodiment of the present invention;
Fig. 3 is a sectional view in the direction of the arrows 3-3 in Fig. 2;
Fig. 4 is a block diagram of a controlling system for switching the mode of front wheel driving power transmitting.
Fig. 5 is a sectional side view of a front wheel driving power take out mechanism according to the second embodiment of the present invention.

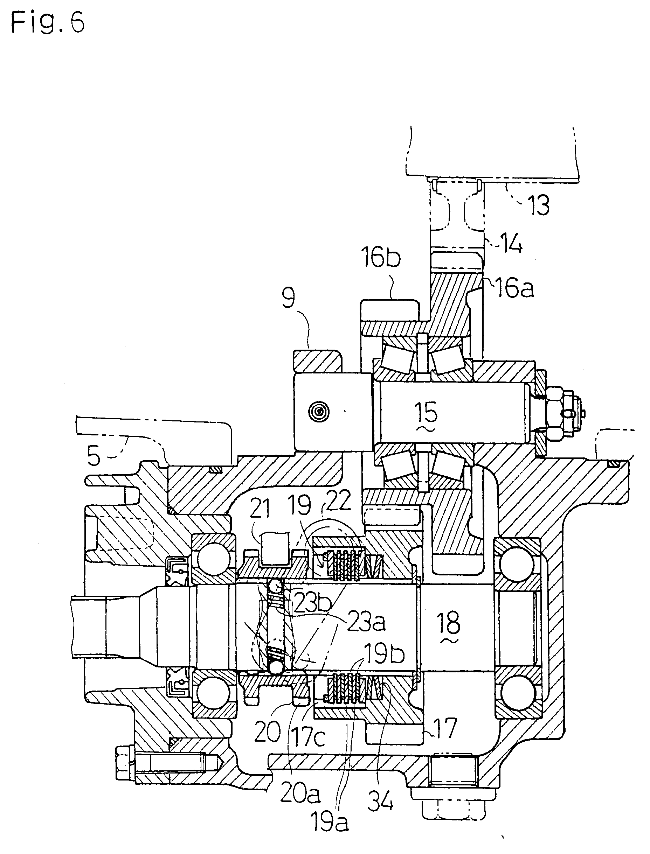

Fig. 6 is a sectional side view of a front wheel driving power take out mechanism according to the third embodiment of the present invention.
Fig. 7 is a sectional side view of a front wheel driving power take out mechanism according to the fourth embodiment of the present invention.
Fig. 8 is a side sectional view of a front wheels driving power take out mechanism according to the fifth embodiment of the present invention.

### Detailed Description of the Preferred Embodiments

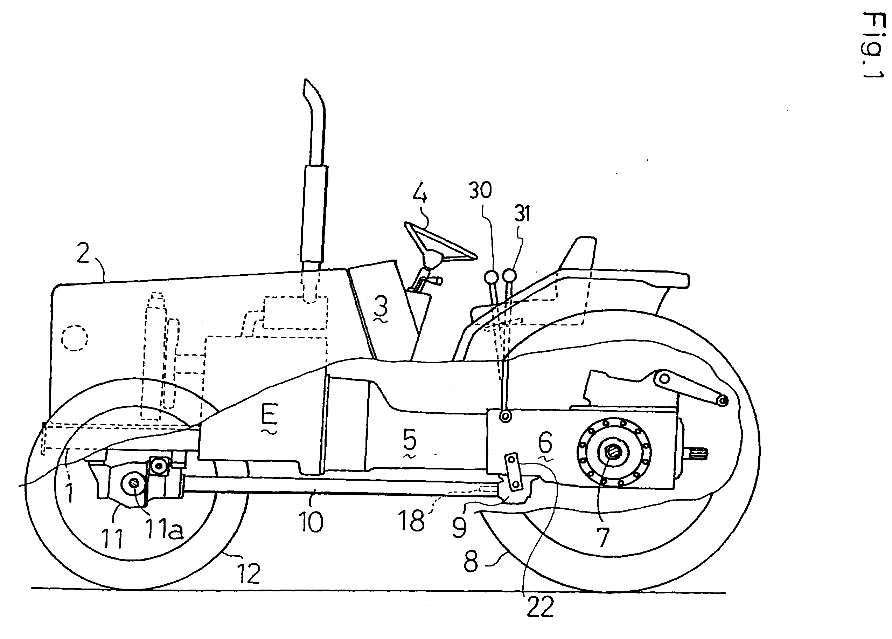

At first, a whole structure of a tractor will now be described with particular reference to Fig. 1. An engine E, a battery and the like are mounted on an engine frame 1 and covered with a bonnet 2. A dashboard 3, having a steering wheel 4 thereabove, is disposed at the rear end of bonnet 2. A clutch housing 5 and a transmission casing 6 are disposed fore and rear in a series from engine E. A rear-wheel differential unit is equipped within transmission casing 6. Left and right rear axles 7 extend from both left and right sides of transmission casing 6. A rear wheel 8 serving as a first driving wheel is attached to an outer end of each rear axle 7. A breaking device, as usual, is equipped on each rear axle 7 such that an operator can apply a breaking force onto both rear wheels 8 by his treading a break pedal disposed on a footboard of an operator' s portion.

A main-speed-changing unit and sub-speed-changing unit are disposed in line through clutch housing 5 and transmission casing 6 in order to drivingly connect an output shaft of engine E with the rear-wheel differential unit. A front wheel driving power take out casing 9, housing a transmitting device branching from the part way of power transmitting passage to rear wheels 8 therein, is attached to the lower end of transmission casing 6. The transmitting device in front wheel driving power take out casing 9 transmits the power to front wheels 12 discussed below for rotating them simultaneously with rear wheels 8 is transmitted to front wheels 12 discussed below by said transmitting device. A front end of an output shaft 18 extending forward form front wheel driving power take out casing 9 is connected with a front wheel differential unit in a front axle casing 11 disposed at the lower portion of engine frame 1 through universal joints and a transmitting shaft 10. A front wheel is attached to an outer end of each front axle 11a extending outward from each of both lateral sides of front axle casing 11. Front wheels 12 can be steered by operating of steering wheel 4.

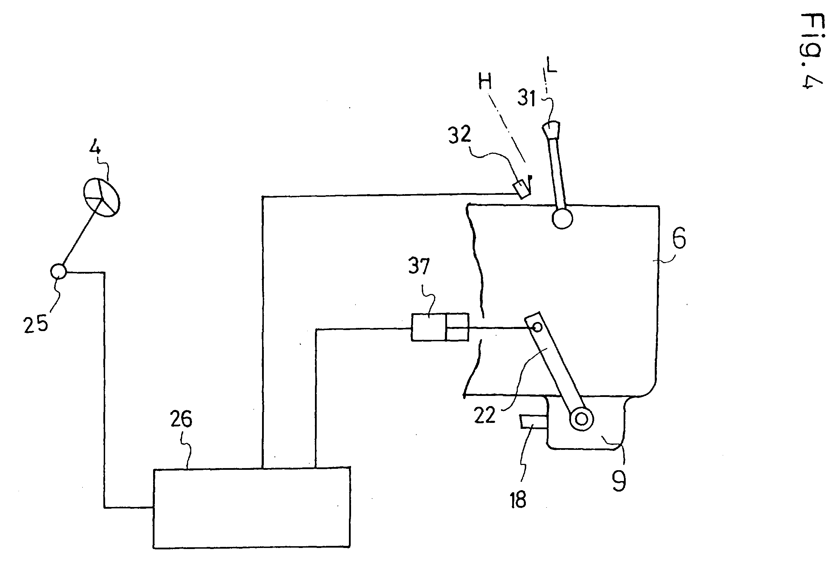

As shown in Fig. 4, a sensor 25 detecting the steering angle of steering wheel 4 is disposed on the way of a steering mechanism from steering wheel 4 through a stem, a pitman arm and the like to front wheels 12, for example, on the basic portion of the stem. Near dashboard 3, a seat or the like are disposed a main-speed-changing lever 30 and a sub-speed-changing lever 31 for switching said main-speed-changing unit and said sub-speed-changing unit. A sensor 32 detecting the high speed position of sub-speed-changing lever 31 is disposed thereabout. Sensor 25 and sensor 32 are connected with a controller 26.

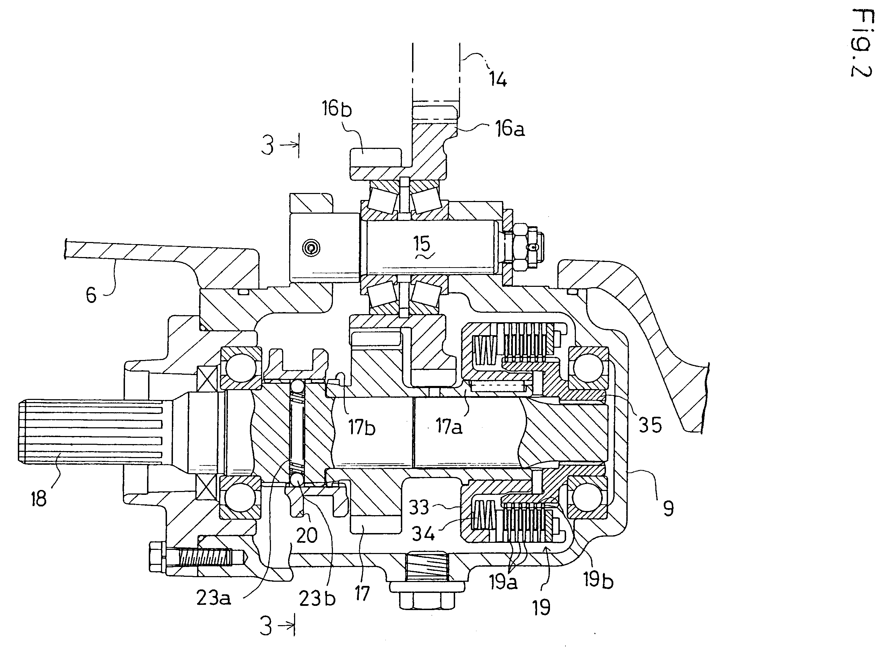

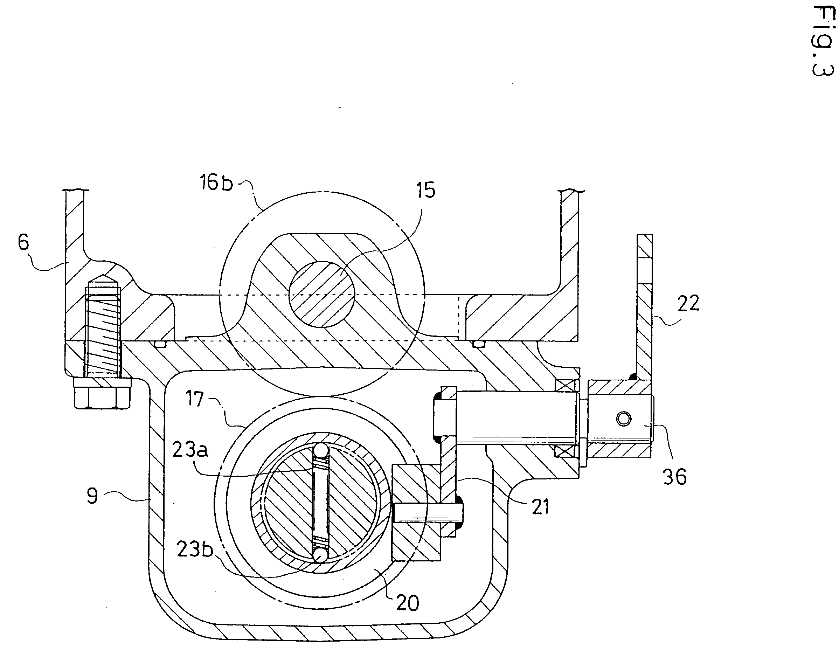

Explanation will be given on a transmitting mechanism in front wheel driving power take out casing 9 provided as the first embodiment in the present invention. Referring to Figs. 2 and 3, a front wheel driving power take out gear 14 is disposed on a transmitting shaft (not shown; a speed-changing shaft connected with said rear wheel differential unit) for driving rear wheels in transmission casing 6. Front wheel driving power take out gear 14 engages with a large diametric gear 16a of a double counter gear 16 pivotally provided on a counter shaft 15 horizontally disposed at the upper portion of front wheel driving power take out casing 9. Forwardly extending output shaft 18 drivingly connected with front wheels 12 as mentioned above is journalled in front wheel driving power take out casing 9 in the longitudinal direction of the vehicle. A transmitting gear 17 pivotally provided on output shaft 18 engages with a small diametric gear 16b of double counter gear 16.

As shown in Fig. 2, a frictional transmitting device 19 is provided between output shaft 18 and transmitting gear 17. In detail, a clutch casing 33 is fixed on a boss 17a projecting from a side surface of transmitting gear 17. Clutch casing 33 is provided therein with a spring 34 and a plurality of driving-side frictional plates 19a, which engage with clutch casing 33 so as not to be relatively rotatable. A plurality of following-side frictional plates 19b are not relatively rotatably engaged on the periphery of a rotational member 35 fixed on output shaft 18. Each of frictional plates 19a and each of frictional plates 19b are juxtaposed and overlap when viewed in the direction of axis of output shaft 18. All juxtaposed frictional plates 19a and 19b are pressed against each other by the predetermined biasing force of spring 34.

The peripheral speed of front wheels 12 are set slightly higher than that of rear wheels 8 in consideration of cornering of the four-wheel driven vehicle like a tractor. When the four-wheel driven vehicle travels on a flat road, a friction is generated between the road and the front wheels by the difference of peripheral speed between front wheels 12 and rear wheels 8. According to the present invention, the frictional torque of frictional transmitting device 19, which is determined by the selection of biasing force of spring 34, is set smaller than that of friction generated between an asphalt way and front wheels 12 when traveling on road at a four-wheel driving mode.

Clutch teeth 17b are formed at the other side surface of transmitting gear 17. A sleeve 20 is splined-engaged with the periphery of output shaft 18 so as to be not relatively rotatable and be axially slidable and is juxtaposed with clutch teeth 17b. A shifter 21 is engaged into the loop-shaped groove of sleeve 20. As shown in Fig. 3, an operation shaft 36 is journalled through the side wall of front wheel driving power take out casing 9. The basic portion of shifter 21 is fixed onto the inner end of operation shaft 36 in casing 9. The end of a shift arm 22 is fixed on the outer end portion of operation shaft 36 at the outside of casing 9. The other end of shift arm 22, as shown in Fig. 4, is connected with slide actuator 37 comprising a cylinder, a solenoid or the like, controlled by controller 26.

Axial sliding of sleeve 20 allows switching between two modes of power transmission to front wheels 12. In detail, when slidden rearward, sleeve 20 (shown under output shaft 18 in Fig. 2) is engaged with clutch teeth 17b so as to switch to the directly transmitting mode in which transmitting gear 17 and output shaft 18 are directly connected with each other. On the other hand, when slidden forward, sleeve 20 (shown above output shaft 18 in Fig. 2) is not engaged with clutch teeth 17b so as to switch to the frictional transmitting mode in which power is transmitted from transmitting gear 17 to output shaft 18 through frictional transmitting device 19. A detent spring 23a and a pair of detent balls 23b are inserted in a diametric through hole bored in output shaft 18 and each detent ball 23b is biased against the inner periphery of sleeve 20 by detent spring 23b so as to locate sleeve 20 to the positions for respective modes.

When sleeve 20 is switched to the directly transmitting mode, transmitting gear 17 is directly connected with output shaft 18 such that output shaft 18 rotates simultaneously with transmitting shaft 13 and the four wheels are driven.

If sub-speed-changing lever 31 is shifted to the high speed position, or steering wheel 4 is steered beyond the predetermined angle, sleeve 20 is slidden forward so as to reach the position of the frictional transmitting mode. In detail, as shown in Fig. 4, sub-speed-changing lever 31 is shifted to the high speed position H such that sensor 32 is switched on. A signal of sensor 32 is processed by controller 26. An output signal is sent from controller 26 to actuator 37. Actuator 37 is activated so as to rotate shift arm 22 and forwardly slide sleeve 20, such that power is transmitted to front wheels 12 in the frictional transmitting mode. When sensor 25 detects an angle of steering wheel 4 beyond predetermined (for example 25 degrees), the detected signal is inputted into controller 26. Controller 26 activates actuator 37 so as to rotate shift arm 22 and slide sleeve 20 forward, such that power is transmitted to front wheels 12 in the frictional transmitting mode.

Thus, when sub-speed-changing lever 31 is set to the high speed position for traveling on the road, power is automatically transmitted to front wheels 12 in the frictional transmitting node. In this mode, when the friction is generated between front wheels 12 and the road, a slip is simultaneously generated between frictional plates 19a and 19b in frictional transmitting device 19 because the frictional torque between frictional plates 19a and 19b thereof is smaller than that between front wheels 12 and the road. Thus, the peripheral speed of output shaft 18 does not reach a rate at which the peripheral speed of wheels 12 exceeds that of rear wheels 8. Therefore, the peripheral speed of front wheels 12 is restricted up to that of rear wheels 8 so as not to drag front wheels 12. Apparently the four-wheel driven vehicle travels as a two-wheel driven vehicle on the road without the need of switching between the four-wheel driving mode and the two-wheel driving mode. In like a manner, front wheels 12 is not dragged during hard cornering so as to provide stability.

The power is kept to be transmitted to front wheels 12 through frictional transmitting device 19 in the fictional transmitting mode. When braking rear wheels 8, the breaking force affects on front wheels 12 such that all four wheels are stopped. Compared to breaking of only rear wheels in the two-wheel driving mode, the braking distance can be reduced.

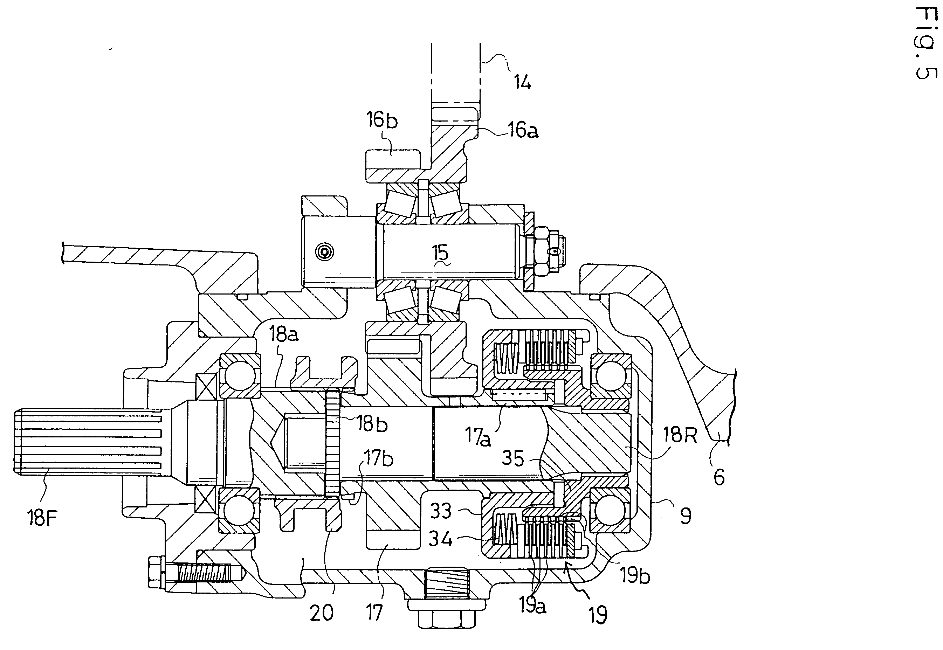

Next, explanation will be given on a transmitting mechanism for taking out front wheel driving power provided at the second embodiment in the present invention. Referring to Fig. 5, output shaft 18 is longitudinally divided. All else are equal to the structure shown in Figs. 2-4. In detail, a front output shaft 18F and a rear output shaft 18R are disposed co-axially and are supported so as to be rotatable in relative to each other. Splines 18a and 18b are formed at the rear portion of the periphery of front output shaft 18F and the front portion of the periphery of rear output shaft 18R, respectively. Sleeve 20 is provided over splines 18a, 18b and clutch teeth 17b so as to be not relatively rotatable and to axially slidable.

When sleeve 20, as shown under front output shaft 18F in Fig. 5, engages with spline 18a on front output shaft 18F and clutch teeth 17b of transmitting gear 17, output shaft 18 is directly connected with transmitting gear 17, thereby giving the directly transmitting mode. When spline 18a engages with spline 18b without clutch teeth 17b, transmitting gear 17 is connected with output shaft 18, thereby giving the frictional transmitting mode so as to undertake the predetermined friction torque through frictional transmitting device 19.

When sleeve 20 is furthermore forwardly slidden so as to also disengage from spline 18b, power is not transmitted to front output shaft 18F, thereby giving the two-wheel driving mode.

In this embodiment, similarly with the above mentioned embodiment, actuator 37 is switched from the position of the directly transmitting mode to the position of frictional transmitting mode when sub-speed-changing lever 31 is shifted to the high-speed position and when steering wheel 4 is steered beyond the predetermined angle. Switching to the two-wheel driving mode is done manually. Alternatively, all the three positions of sleeve 20 may be automatically switched.

Next, explanation will be given on a transmitting mechanism for taking out front wheel driving power provided at the third embodiment of the present invention shown in Fig. 5. In the first and second embodiment, transmitting gear 17 and clutch casing 33 are independently disposed and frictional transmitting device 19 is formed in clutch casing 33. However, in this embodiment, a boss integrally extends forward or rearward (forward in this embodiment) from transmitting gear 17 along the axis of output shaft 18 and frictional transmitting device 19 is formed in the boss. In detail, a plurality of driving-side frictional plate 19a is engaged with inner teeth 17c longitudinally formed at the inner periphery of the boss so as to be not relatively rotatable and to be axially slidable. A plurality of following-side frictional plate 19b are engaged with splines scared on the outer periphery of output shaft 18 so as to be not relatively rotatable and to be axially slidable.

Each frictional plate 19a and frictional plate 19b are juxtaposed and pressed against each other at a pressure maintained constant. The biasing force of spring 34, as is the case with the first and second embodiment, is adjusted to limit the frictional torque between frictional plates 19a and 19b not to exceed the frictional torque between front wheels 12 and the road.

Sleeve 20, as is the case with the first embodiment shown in Figs. 2 and 3, is disposed on output shaft 18 so as to be switched back and forth between the two positions of the directly transmitting mode and the frictional transmitting mode. Detent spring 23a and the pair of detent balls 23b are provided in output shaft 18 so as to locate the position of each mode. When sub-speed-changing lever 31 is switched to the high speed position and when steering wheel 4 is steered at an angle beyond the predetermined rate, sleeve 20 is switched to the frictional transmitting mode position. When sub-speed-changing lever 31 is not positioned at the high speed position or the cornering angle of steering wheel 4 is less than the predetermined rate, sleeve 20 is switched to the directly transmitting mode position.

In this embodiment, frictional transmitting device 19 on output shaft 18 is disposed between transmitting gear 17 and sleeve 20 so as to downsize the rear portion of front wheel driving power take out casing 9 extending rearward from front wheel driving power take out gear 14 in transmission casing 6. Therefore the front portion thereof extending forward from front wheels driving power take out gear 14 is increased so as to reduce the distance between output shaft 18 and the front wheel differential unit, such that the power transmitting ability is increased. However, in accordance with another case, boss having frictional transmitting device 19 therein may be extended rearward from transmitting gear 17 and formed at the end of output shaft 18.

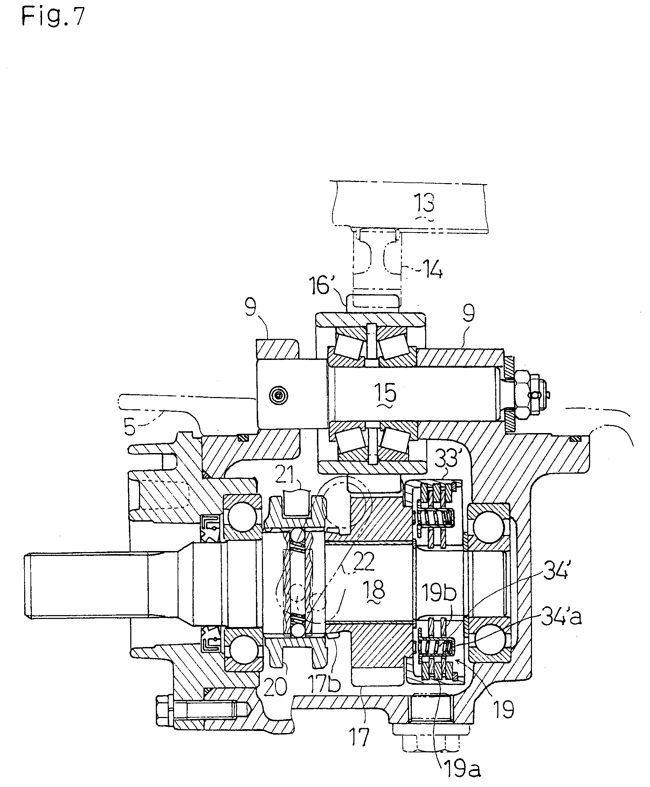

Next, explanation will be given on a transmitting mechanism for taking out front wheel driving power provided at the fourth embodiment in the present invention. Referring to Fig. 7, frictional transmitting device 19 is disposed behind transmitting gear 17. A counter gear 16' is relatively rotatably provided on counter shaft 15 and engaged with transmitting gear 17 in front wheel driving power take out casing 9. With regard to double counter gear 16 composed of large diameter 16a and small diameter 16b as shown in the first to third embodiments, the area for rotating large diametric gear 16 is required in front wheel driving power take out casing 9. However, in this embodiment, the kind of area is not required such that the length of front wheel driving power take out casing 9 can be reduced. In other words, a boss extending rearward from transmitting gear 17 for rotating large diametric gear 16a is not required. The front end of clutch casing 33', which houses frictional transmitting device 19 disposed behind transmitting gear 17, is directly fixed onto the rear end of transmitting gear 17. Accordingly, the rear portion of front wheel driving power take out casing 9 is reduced even in the condition that frictional transmitting 19 is disposed behind transmitting gear 17. This embodiment can be effective in such structure that there is no need to enlarge the drive ratio from front wheels driving power take out gear 14 to transmitting gear 17.

Explanation will be given on the structure of frictional transmitting device 19 in this embodiment. A plurality of driving-side frictional plates 19a are engaged with the inner peripheral of clutch casing 33' so as to be not relatively rotatable and to be axially slidable. In clutch casing 33', a plurality of following-side frictional plates 19b are engaged with splines scared on the outer periphery of output shaft 18. Each frictional plate 19a and each frictional plate 19b are juxtaposed. A pipe 34' a, having a closed rear end and an open front end forming a flange, longitudinally passes through the portion of all frictional plates 19b offset by frictional plates 19a. A spring 34' is inserted into pipe 34' a. The front end of spring 34' abuts against the rear end of transmitting gear 17 through the open front end of pipe 34' a. The flange of the front end of pipe 34' abuts against the most front frictional plate 19a, so that the most front frictional plate 19a is rearward biased so as to press all frictional plates 19a and 19b by the biasing force of spring 34' . The frictional torque between frictional plates 19a and 19b generated by the biasing force is limited smaller than that between front wheels 12 and the road, thereby giving the frictional transmitting mode similar to the above discussed.

The structures of sleeve 20, detent spring 23a and detent balls 23b are similar to those discussed above. Sleeve 20 can be switched back and forth between the respective positions of the directly transmitting mode and the frictional transmitting mode. Also, in accordance with shifting sub-speed-changing lever 31 to the high speed position and steering operation of steering wheel 4 beyond the predetermined angle, sleeve 20 can be automatically switched to the frictional transmitting mode.

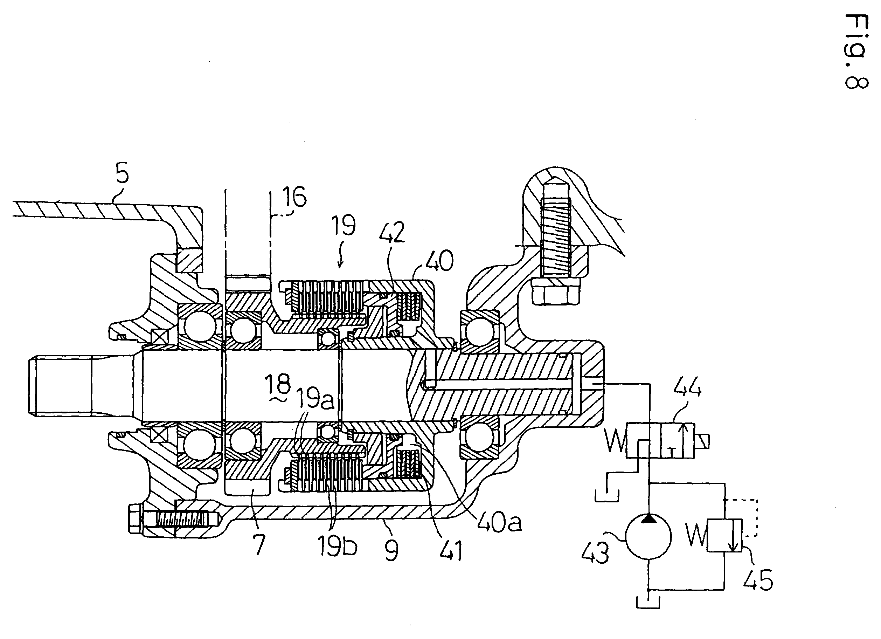

Next, explanation will be given on a transmitting mechanism for taking out front wheel driving power provided at the fifth embodiment in the present invention. Referring to Fig. 8, frictional transmitting device 19 of the present embodiment is a hydraulic multidisc clutch which can adjust the biasing force between the frictional plates so as to bring the respective states of frictional transmitting mode and the directly transmitting mode.

In detail, a plurality of driving-side frictional plates 19a is engaged with the outer periphery of boss of transmitting gear 17 rotatably provided on output shaft 18 so as to be not relatively rotatable and axially slidable. A plurality of following-side frictional plates 19b is engaged with the inner periphery of clutch cylinder 40 fixed on output shaft 18 and covering the boss of transmitting gear 17. A spring chamber 40a is formed in clutch cylinder 40 so as to insert spring 41 therein. A piston 42 is disposed between the boss of clutch cylinder 40 fixed on output shaft 18 and the cylinder formed by the outer periphery thereof so as to be slidable co-axially with output shaft 18. Piston 42 is biased so as to press frictional plates 19a and 19b by spring 41. The biasing force of spring 41 is set so as to limit the frictional torque between the frictional plates 19a and 19b smaller than that between front wheels 12 and the road for giving the frictional transmitting mode.

Pressure oil for acting piston 42 can be supplied from a hydraulic pump 43 into spring chamber 40a through a mode switching valve 44. A relief valve 45 is disposed in a passage of the pressure oil so as to set the acting pressure of piston 42. When the pressure oil is provided, piston 42, which is pressured by the sressure oil in addition to the biasing of spring 41, presses frictional plates 19a and 19b in approximate contact with one another, thereby giving the directly transmitting mode.

A two-positioned electromagnetic solenoid valve is used for mode switching valve 44. When an operator sets a mode selecting tool (like a lever), which is provided for selecting one of the two four-wheel driving mode types, into a frictional transmitting mode, node switching valve 44 is switched to the left position shown in Fig. 5 such that the oil in spring chamber 40a is drained so as to make piston 42 press frictional plates 19a and 19b by only the biasing force of spring 41. On the other hand, when the mode selecting tool are set into the directly transmitting mode, mode switching valve 44 is switched to the right position so that spring chamber 40a is supplied with pressure oil from oil pump 43, so that both biasing force of spring 41 and pressure oil make piston 42 press frictional plates 19a and 19b.

For making the switching between the two modes linked with operating of sub-speed-changing lever 31 and steering wheel 4 in this embodiment, it is desired such a construction that sensor 32 detecting the operation of sub-speed-changing lever 31 to the high speed position and sensor 25 detecting the steering angle of steering wheel 4 beyond the predetermined rate, instead of mode selecting tool, are provided as discussed above so as to input the detecting signals thereof into controller 26 and output the output signals from controller 26 to mode switching valve 44 instead of actuator 37.

In the present embodiment, it may be so constructed that spring 41 and mode switching valve 44 are omitted and relief valve 45 is made to be adjustable. In detail, a spring retainer for a relief spring of relief valve 45 is made to be movable according to the operation of the mode selecting tool or the detects of sub-speed-changing lever 31 and steering wheel 4. When the front wheel transmitting mode is set into the frictional transmitting mode by such operation or detection, the spring retainer moves so as to weaken the biasing force of the relief spring, thereby reducing the oil pressure for acting piston 41 so as to reduce the frictional torque between frictional plates 19a and 19b to the degree corresponding to the frictional transmitting mode. When setting in the directly transmitting mode, the spring retainer moves so as to enlarge the biasing force of the relief spring, thereby increasing the oil pressure for acting piston 41 so as to increase the frictional torque between frictional plates 19a and 19b to the degree corresponding to the directly transmitting mode.

In the above first through fifth embodiments, frictional transmitting device 19 is a frictional multidisc clutch, however, a viscous clutch or a cone clutch is also accepted. Also, the clutch mechanism shown in the first through fourth embodiments is a dog clutch for engaging sleeve 20 with clutch teeth 17b of transmitting gear 17, however, a claw clutch or a ball clutch is also accepted.

## Claims

1. A four-wheel driven vehicle comprising:
a pair of left and right first driving wheels having a breaking unit;
a first transmitting system from a prime mover to said first driving wheels;
pair of left and right second driving wheels;
a second transmitting system branching from said first transmitting system to said second driving wheels;
a frictional transmitting passage provided in the second transmitting system, wherein the frictional torque of said frictional transmitting passage is set smaller than that between said second driving wheels and a road surface; and
a directly transmitting passage going around said frictional transmitting passage provided in said second transmitting system, wherein one of said frictional transmitting passage and said directly transmitting passage is selected.

2. A four-wheel driven vehicle comprising:
a pair of left and right first driving wheels having a breaking unit;
a first transmitting system from a prime mover to said first driving wheels;
pair of left and right second driving wheels;
a second transmitting system branching from said first transmitting system to said second driving wheels dividing;
a frictional transmitting passage provided in said second transmitting system, wherein a slip is generated in said frictional transmitting passage when said second driving wheels of a traveling vehicle are subjected to a resistance of a road surface; and
a directly transmitting passage going around said frictional transmitting passage provided in said second transmitting system, wherein one of said frictional transmitting passage and said directly transmitting passage is selected.

3. A four-wheel driven vehicle comprising:
a pair of left and right first driving wheels having a breaking unit;
a first transmitting system from a prime mover to said first driving wheels;
a pair of left and right second driving wheels;
a second transmitting system branching from said first transmitting system to said second driving wheels dividing;
a frictional transmitting passage provided in said second transmitting system, wherein the frictional torque generated in said frictional transmitting passage is set so as to enable said breaking unit to transmit the breaking torque thereof applied on said first driving wheels to said second driving wheels; and
a directly transmitting passage going around said frictional transmitting passage provided in said second transmitting system, wherein one of said frictional transmitting passage and said directly transmitting passage is selected.

4. A four-wheel driven vehicle comprising:
a pair of left and right first driving wheels having a breaking unit;
a first transmitting system from a prime mover to said first driving wheels;
a pair of left and right second driving wheels;
a transmitting gear rotated by the power taken out from said first transmitting system;
an output shaft for transmitting the power to said second driving wheels, wherein said transmitting gear is relatively rotatably provided on said output shaft;
a frictional transmitting device interposed between said transmitting gear and said output shaft, wherein said frictional transmitting device generates a slip between said transmitting gear and said output shaft when said second driving wheels of a traveling vehicle are subjected to a resistance of a road surface; and
a directly transmitting device disposed in parallel with said frictional transmitting device, said one of said frictional transmitting device and said directly transmitting device is selected.

5. A four-wheel driven vehicle comprising:
a pair of left and right first driving wheels having a breaking unit; a first transmitting system from a prime mover to said
first driving wheels;
pair of left and right second driving wheels;
a second transmitting system branching from said first transmitting system to said second driving wheels dividing;
a frictional transmitting passage provided in said second transmitting system, wherein said frictional transmitting passage is switched with the frictional torque generated therein between such a small state as to generate a slip and such a large state as to prevent a slip.

6. A four-wheel driven vehicle according to claim 5, further comprising:
means for speed changing of said first driving wheels provided in said first transmitting system, wherein said frictional torque of said frictional passage is set in said small state while said means is set in its high speed stage, and is set in said large state while said means is set in its low speed stage.

7. A four-wheel driven vehicle according to claim 1, 2, 3, or 4, further comprising:
means for speed changing of said first driving wheels provided in said first transmitting system, wherein said frictional transmitting passage is selected while said means is set in its high speed stage, and said directly transmitting passage is selected while said means is set in its low speed stage.

8. A four-wheel driven vehicle according to claim 1, 2, 3, or 4, wherein said second driving wheels are steerable wheels.

9. A four-wheel driven vehicle according to claim 8, wherein said frictional transmitting passage is selected while the cornering angle of said second driving wheels is not less than the predetermined rate, and said directly transmitting passage is selected while the cornering angle of said second driving wheels is less than the predetermined rate.

10. A four-wheel driven vehicle according to claim 5, wherein said second driving wheels are steerable wheels.

11. A four-wheel driven vehicle according to claim 10, wherein said frictional torque of said frictional passage is set in said small state while the cornering angle of said second driving wheels is not less than the predetermined rate, and is set in said large state while the cornering angle of said second driving wheels is less than the predetermined rate.

12. A four-wheel driven vehicle according to claim 7, 9 or 11, wherein power transmitting from said first transmitting system to said second transmitting system is switchable to be made and broken.
